# EUROPEAN PATENT APPLICATION

(11) **EP 1 327 821 A1**
(43) Date of publication of application: **16.07.2003**
(21) Application number: 02258758.8
(22) Date of filing: 19.12.2002
(51) Int. Cl.: F23D 14/22, C01B 3/36

(54) **Burner for hydrogen generation system and hydrogen generation system having the same**

(30) Priority: 25.12.2001 JP 2001391322
(71) Applicant: MATSUSHITA ELECTRIC INDUSTRIAL CO., LTD., Kadoma-shi, Osaka 571-8501 (JP)
(72) Inventor: Mukai, Yuji, Kadoma-shi, Osaka 571-0070 (JP); Maenishi, Akira, Ikeda-shi, Osaka 563-0055 (JP); Asou, Tomonori, Kitakatsuragi-gun, Nara 635 0831 (JP); Yoshida, Yutaka, Nabari-shi, Mie 518-0746 (JP)
(74) Representative: Dempster, Benjamin John Naftel

(57) **Abstract**

To provide a burner for a hydrogen generation system having an excellent combustion stability which can be achieved at low costs, and a hydrogen generation system having such a burner.

A burner for hydrogen generation systems according to the present invention includes a combustion chamber that has a taper that enlarges in a flame radiation direction, and a distributor having an upper-stage gas injection ports for injecting utility gas and off-gas into the combustion chamber. Air injection ports are formed in the tapered side wall of the combustion chamber for injecting combustion air into the combustion chamber. The air injection ports are generally opposed to the upper-stage gas injection ports formed in the distributor.

## Description

The present invention relates to a burner that is used to operate a hydrogen generation system for a fuel cell system, in which the fuel cell system generates power by a reaction of a feed material to produce hydrogen, the feed material containing a compound made up of at least carbon and hydrogen. The present invention also relates to a hydrogen generation system including such a burner.

A first related art on burners that are used to operate hydrogen generation systems for fuel cell systems (hereinafter, merely referred to as a "burner for hydrogen generation systems" ) includes a cylindrical burner head, a first introduction pipe and a second introduction pipe . The burner head has an outer wall provided with a burner port and a combustion chamber provided inside thereof. The first and second introduction pipes through which high BTU gas and low BTU gas, respectively, can flow into the combustion chamber of the burner head. Thus, the gases with different BTU values can be supplied to the combustion chamber for combustion through the single burner port (see, for example, Japanese Patent Laid-Open No. 2001-185186), The first related art simplifies the configuration of the burner with the use of the shared burner port for the combustion of the high and low BTU gases.

A second related art on burners for hydrogen generation systems comprises a combustion chamber that is implemented using an air nozzle with multiple air ports through which a jet of combustion air is injected under pressure. The diameter of the combustion chamber gradually becomes larger from the upstream side to the downstream side (see, for example, Japanese Patent Publication No. 5-59325). This configuration provides stable combustion at high combustion load.

A third related art on burners for hydrogen generation systems comprises a burner port assembly that has a taper that enlarges from a fuel gas injection unit (see, for example, Japanese Patent Laid-Open No. 2001-201019). This reduces the size of the system.

Burners for hydrogen generation systems have two distinguishing features from other burners. Firstly, the burners for hydrogen generation systems are designed to burn a fuel gas and an off-gas released from a fuel cell. The fuel gas and the off-gas are significantly different in their burning velocity. More specifically, utility gas, which is a typical fuel gas, has aburning velocity of about 36 cm/sec. On the other hand, hydrogen, which is the major component of the off-gas that is released from the fuel cell, has a burning velocity of about 320 cm/sec. It was difficult to provide stable burning of fuels using a single burner that are significantly different in their burning velocity. This is because a burner design adapted to either one fuel causes a disadvantageous consequence. A burner may be adapted to a high burning velocity of hydrogen. Using such a burner for the combustion of the utility gas causes the major portion of the utility gas to be exhausted without being burnt or otherwise causes flame blowout. This is because the burning velocity for it exceeds that of the utility gas. On the other hand, a burner may be adapted to a low burning velocity of the utility gas. With this configuration, however, the hydrogen may be burnt in the close vicinity of the fuel gas injection port. This inevitably results in the presence of flames near the surface of the fuel gas injection port. In such a case, the combustion may be rendered unstable due to the transfer of heat of combustion through the fuel gas injection port. Alternatively, a distributor may glow to redness by the heat of combustion.

Secondly, the flow rates of the off-gas released from the fuel cell and of the fuel gas vary according to varying loads of electricity carried by the fuel cell system. It is necessary to use a huge amount of feed material to produce a considerable amount of hydrogen with a large load of electricity. The flow rate of the fuel gas should be increased accordingly. The increase in the feed material inevitably increases the flow rate of the off-gas. This means that a larger load of electricity requires larger amounts of fuel gas and, in turn, of off-gas. Likewise, a lower load of electricity requires smaller amounts of them. It is comparatively easy to provide stable combustion with a mixture of gases when they are relatively less different in burning velocity from one another, even with a slight variation of their flow rates. However, the stability of the combustion can hardly be maintained with a variation of gas flow rates in a burner for a hydrogen generation system where the gases having significantly different burning velocities are mixed for combustion.

As to the above-mentioned first related art, the increase in gas flow rate results in the flame blowout. Thus, stable combustion cannot be achieved when with a variation of the gas flow rate. In addition, since a combustion region is limited to a small range within a cylindrical combustion chamber, the temperature of the flame rises greatly in response to the increase in amount of fuel to be burnt. This produces a large amount of nitrogen oxides. In addition, combustion in a narrow space precariously fluctuates the flame shape, producing problematic combustion noise.

The second related art does not involve the problems of the flame blowout and undesirable increase in concentration of the nitrogen oxides, even with an increase in gas flow rate. However, the configuration having a gradually changing combustion chamber involves the manufacturing step of welding two or more components having different diameters, which increases manufacturing costs . Therefore, the second related art has been difficult to be put to practical use regardless of its excellent feature of the highly stable combustion.

The third related art is also hardly suffered from the problem of the flame blowout, as in the second related art. However, insufficient mixing of the gas and the combustion air occurs because they are merely supplied to the burner port assembly. The flame may be extinguished when the combustion load suddenly varies. Thus, the third related art is also not satisfactory in terms of the stability of combustion.

The present invention was made with respect to the above-mentioned problems and, an object thereof is to provide a burner for a hydrogen generation system with which a fuel gas and an off-gas that are significantly different in their burning velocities can be burnt in a stable condition at varying flow rates.

In order to solve the above-mentioned problems, a burner for a hydrogen generation system according to the present invention comprises a combustion chamber that has a taper that enlarges in a flame radiation direction; and a distributor that is placed in said combustion chamber to supply to said combustion chamber a fuel gas containing a compound made up of at least carbon and hydrogen and an off-gas that is released from a fuel cell, said distributor being projected in the flame radiation direction, said combustion chamber having multiple combustion air injection ports formed in said combustion chamber to inject combustion air into said combustion chamber, said distributor having multiple gas injection ports formed in said distributor to inject the fuel gas and the off-gas into said combustion chamber, at least some of the combustion air injection ports and at least some of the gas injection ports being arranged in such a manner that a jet flow of the combustion air collides with jet flows of the fuel gas and the off-gas.

With the combustion chamber having the taper that enlarges in the flame radiation direction, the flow velocity of the combusted gas decreases sequentially in the flame radiation direction. This makes it possible to coincide the flow velocity of the combusted gas with the flow velocities of the fuel gas and the off-gas in different spaces within the combustion chamber, even when the fuel gas and the off-gas that are different in burning velocities are mixed together for combustion. Thus, stabler combustion can be made. The collision between the jet flows of the fuel gas and of the off-gas with the jet flow of the combustion air facilitates the mixing of the fuel gas and the off-gas with the combustion air, achieving stable combustion.

In the burner for hydrogen generation systems according to the above-mentioned invention, it is preferable that the combustion air injection ports and the gas injection ports that are arranged to achieve the collision are aligned with each other in a generally colinear manner from the perspective of the flame radiation direction.

In the burner for hydrogen generation systems according to the above-mentioned invention, it is preferable that the combustion air injection ports that are arranged to achieve the collision are formed in the tapered side wall of said combustion chamber.

In the burner for hydrogen generation systems according to the above-mentioned invention, it is preferable that combustion air injection ports that are arranged to achieve the collision are formed in the tapered side wall of said combustion chamber, the combustion air injection ports being passed through the side wall in a direction generally perpendicular to the side wall, and wherein the gas injection ports that are arranged to achieve the collision is passed through said distributor in a direction generally perpendicular to said distributor.

In the burner for hydrogen generation systems according to the above-mentioned invention, it is preferable that the combustion air injection ports that are arranged to achieve the collision are formed in the bottom wall of said combustion chamber.

In the burner for hydrogen generation systems according to the above-mentioned invention, it is preferable that the combustion air injection ports that are arranged to achieve the collision are formed in the tapered side wall of said combustion chamber and in the bottom wall of said combustion chamber.

In addition, a burner for a hydrogen generation system according to the present invention comprises a combustion chamber that has a taper that enlarges in a flame radiation direction; and a distributor that is placed in said combustion chamber to supply to said combustion chamber a fuel gas and an off-gas that is released from a fuel cell, said distributor being projected in the flame radiation direction, said combustion chamber having multiple combustion air injection ports formed in the tapered side wall of said combustion chamber to inject combustion air into said combustion chamber, said distributor having multiple gas injection ports formed in said distributor to inject the fuel gas and the off-gas into said combustion chamber, at least some of the combustion air injection ports and at least some of the gas injection ports being generally opposed to each other.

In the burner for hydrogen generation systems according to the above-mentioned invention, it is preferable that the combustion air injection ports that are generally opposed are formed in the tapered side wall of said combustion chamber, the combustion air injection ports being passed through the side wall in a direction generally perpendicular to the side wall, and wherein the gas injection ports that are generally opposed are passed through said distributor in a direction generally perpendicular to said distributor.

In the burner for hydrogen generation systems according to the above-mentioned invention, it is preferable that a taper angle of said combustion chamber is in a range of from 10 degrees to 90 degrees, both inclusive.

In the burner for hydrogen generation systems according to the above-mentioned invention, it is preferable that the combustion air injection ports are arranged in such a manner that a larger amount of the combustion air is injected into said combustion chamber on the downstream side than on the upstream side of said combustion chamber.

In the burner for hydrogen generation systems according to the above-mentioned invention, it is preferable that the density of the combustion air injection ports is higher on the downstream side than on the upstream side of said combustion chamber.

In the burner for hydrogen generation systems according to the above-mentioned invention, it is preferable that the diameter of the combustion air injection ports is larger on the downstream side than on the upstream side of said combustion chamber.

In the burner for hydrogen generation systems according to the above-mentioned invention, it is preferable that the gas injection ports comprising a first gas injection port and a second gas injectionport, the first gas injection port being for injecting the fuel gas, and the second gas injection port being for injecting the off-gas, the second gas injection port being located downstream of said combustion chamber relative to the first gas injection port.

In the burner for hydrogen generation systems according to the above-mentioned invention, it is preferable that said combustion chamber is formed by pressing or draw-pressing a sheet-like material.

In the burner for hydrogen generation systems according to the above-mentioned invention, it is preferable that said combustion chamber is cylindrical in shape having a flange member that is projected outward in the radial direction, the flange member having a turned-up portion along the periphery thereof.

In the burner for hydrogen generation systems according to the above-mentioned invention, it is preferable that the burner further comprises an electrode that is placed in said combustion chamber; and a flame detection circuit that is connected to said electrode.

In the burner for hydrogen generation systems according to the above-mentioned invention, it is preferable that the burner further comprises an electrode that is placed in said combustion chamber; and a flame ignition circuit that is connected to said electrode.

In the burner for hydrogen generation systems according to the above-mentioned invention, it is preferable that the burner further comprises an electrode that is placed in said combustion chamber; a flame detection circuit and a flame ignition circuit that are connected to said electrode; and a switch circuit that is used to switch the connection between said electrode and said flame detection circuit and the Connection between said electrode and said flame ignition circuit.

In the burner for hydrogen generation systems according to the above-mentioned invention, it is preferable that said electrode is projected from the center of said distributor in the flame radiation direction.

A hydrogen generation system according to the present invention comprises a reformer for generating a reformed gas that contains hydrogen by reforming a feed material that contains a compound made up of at least carbon and hydrogen; and a burner for a hydrogen generation system according any one of Claims 1 to 18.

This configuration makes it possible to continue stable burning with the burner for the hydrogen generation system even when the flow rates of the fuel gas and of the off-gas are varied. It ensures to generate a necessary amount of hydrogen.

This object, as well as other objects, features and advantages of the present invention will become more apparent to those skilled in the art from the following description taken with reference to the accompanying drawings.
Fig. 1 is a cross-sectional view showing an essential configuration of a hydrogen generation system including a burner for a hydrogen generation system according to a first embodiment of the present invention;
Fig. 2 is a plan view showing a configuration of a burner according to the first embodiment of the present invention;
Fig. 3 is a cross-sectional view taken along line III-III in Fig. 2;
Fig. 4 is a cross-sectional view for explaining the combustion state in the burner according to the first embodiment of the present invention;
Fig. 5 is a cross-sectional view for explaining the combustion state in a modified version of the burner according to the first embodiment of the present invention;
Fig. 6 is a cross-sectional view for explaining the combustion state in a modified version of the burner according to the first embodiment of the present invention;
Fig. 7 is a cross-sectional view for explaining the combustion state in a modified version of the burner according to the first embodiment of the present invention;
Fig. 8 is a cross-sectional view for explaining the combustion state in the burner according to the first embodiment of the present invention;
Fig. 9 is a cross-sectional view showing a configuration of a modified version of the burner according to the first embodiment of the present invention;
Fig. 10 is a cross-sectional view showing a configuration of a modified version of the burner according to the first aspect of the present invention;
Fig. 11 is a cross-sectional view showing a configuration of a modified version of the burner according to the first embodiment of the present invention;
Fig. 12 is a graphical representation of the carbon monoxide concentration as a function of the excess air ratio between the burner of this embodiment and a conventional burner;
Fig. 13 is a graphical representation for explaining of the existence of a fluctuating combustion zone;
Fig. 14 is a cross-sectional view showing a configuration of a modified version of the burner according to the first aspect of the present invention;
Fig. 15 is a cross-sectional view showing a configuration of a modified version of the burner according to the first embodiment of the present invention;
Fig. 16 is a cross-sectional view showing a configuration of a burner according to a second embodiment of the present invention; and
Fig. 17 is a cross-sectional view showing a configuration of a burner according to a third embodiment of the present invention.

An embodiment of the present invention is described in detail below with reference to the drawings.

### (First Embodiment)

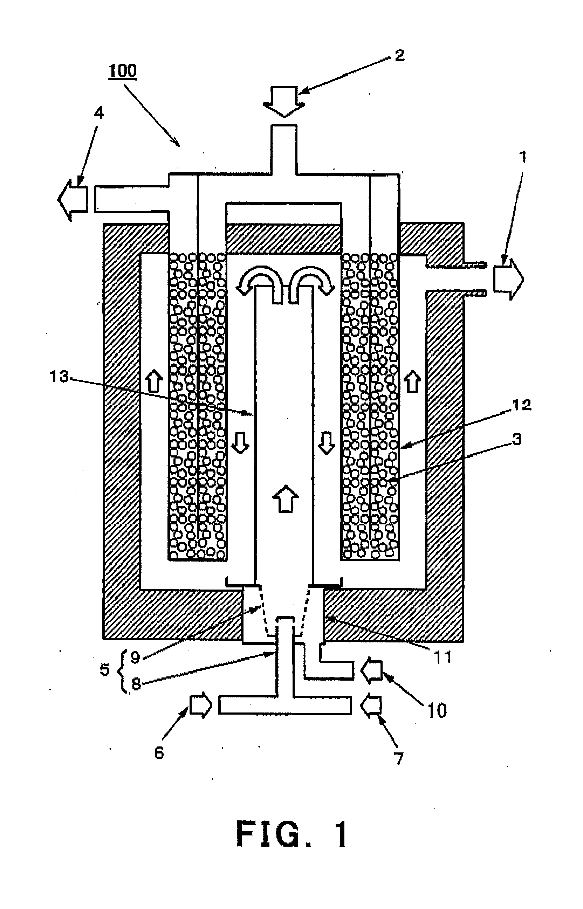

Fig. 1 is a cross-sectional view showing an essential configuration of a hydrogen generation system including a burner for a hydrogen generation system according to a first embodiment of the present invention.

Fig. 1 shows a hydrogen generation system 100 that generates hydrogen to be supplied to a fuel cell system, by reforming a feed material containing a compound, such as utility gas, made up of at least carbon and hydrogen. The hydrogen generation system 100 comprises a burner 5, a catalyst container 12, and a combustion cylinder 13. The burner 5 is enclosed in an air chamber 11 from which a combustion air is drawn. The catalyst container 12 is for holding a catalyst bed 3 in, which the catalyst bed 3 is filled with a catalyst based on nickel or ruthenium. The combustion cylinder 13 is placed above the burner 5 in order to prevent the flame coming from the burner 5 from being directly contacted with the catalyst container 12. The combustion cylinder 13 also has the function of defining a gas flow passage. The hydrogen generation system 100 generates a produced gas 4 that is made up of hydrogen, carbon dioxide, and carbon monoxide by through the reaction of a feed gas 2 in the catalyst bed 3 in the catalyst container 12. The feed gas 2 is made up of the utility gas and steam. This generation is based on an endothermic reaction that occurs at a high temperature of about 700° C. To this end, a hot gas is fed by the burner 5 to heat the feed gas 2 and the catalyst bed 3.

Examples of the compound that is made up of at least carbon and hydrogen include, besides the utility gas, hydrocarbons such as methane, ethane, and propane, natural gas, alcohols such as methanol, kerosene, and LPG.

As will be described later, the burner 5 has a combustion chamber 9, and a distributor 8 that sends the gas to the combustion chamber 9. The distributor 8 mixes a utility gas 6, which is a feed gas, and an off-gas 7 that is released from a fuel cell before injecting the mixed gas into the combustion chamber 9. On the other hand, the combustion air that is drawn from the air chamber 11 is then injected into the combustion chamber 9 through an air injection port which will be described later. The burner 5 mixes the gases and the air sufficiently in the combustion chamber 9 for the combustion and produces the flame in an upward direction. The mixture of the utility gas 6 and the off-gas 7 is hereinafter referred to as a combusted gas.

A combusted gas 1 that has been used in the burner 5 flows around the catalyst container 12 through the combustion cylinder 13. Then, it is exhausted outside the hydrogen generation system 100.

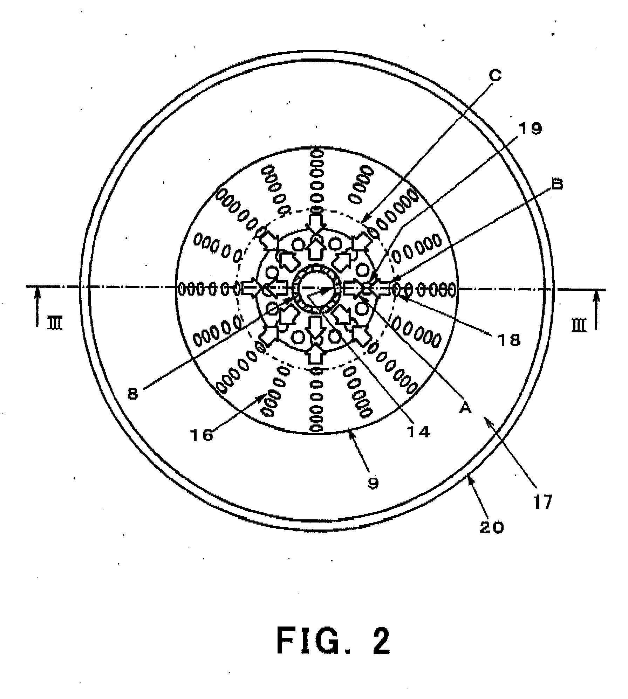

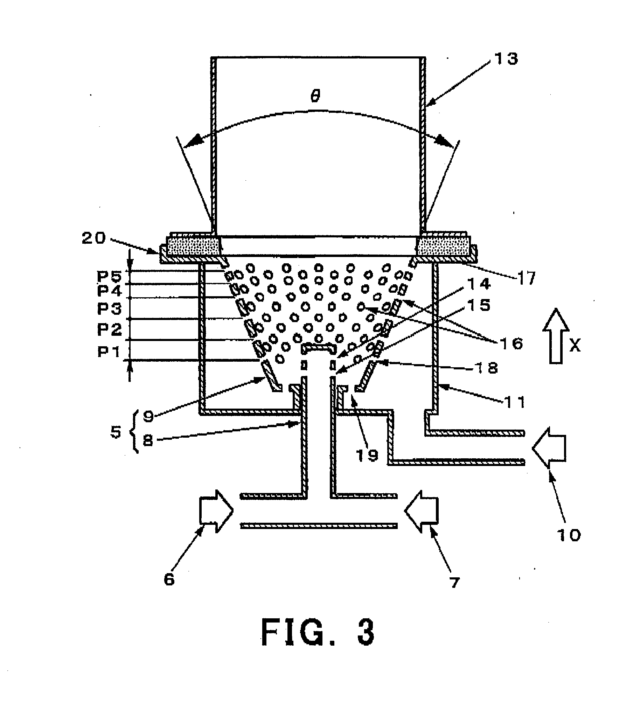

Details of the burner 5 according to the present invention are described with reference to Figs. 2 and 3. Fig. 2 is a plan view showing a configuration of the burner according to the first embodiment of the present invention. Fig. 3 is a cross-sectional view taken along line III-III in Fig. 2. In Fig. 3, the combustion cylinder 13 and the air chamber 11 are illustrated for the convenience of description.

As shown in Figs . 2 and 3, the cylindrical combustion chamber 9 surrounding the flame has a taper that enlarges in the direction in which flame radiates (flame radiation direction) indicated by "X" . The upper end of the combustion chamber 9 is open to the air. The tapered side wall of the combustion chamber 9 has multiple air injection ports 16 through which the air combustion air 10 is injected under pressure into the combustion chamber 9. The air injection ports 16 are arranged with a spacing between adjacent ports 16 decreasing along a flame radiation direction "X", i.e., upwardly. The pitch P in the up-and-down direction of the air injection ports 16 in Fig. 3 satisfies the relation P1 > P2 > P3 > P4 > P5. The bottom wall of the combustion chamber 9 has multiple lower air injection ports 19 which are similar to the air injection ports 16, to inject the combustion air 10 under pressure.

The upper open end of the combustion chamber 9 has a flange member 17 that extends in the radial direction. The flange member 17 has a rib 20 at the end thereof to increase the strength.

The cylindrical tubular distributor 8 is coaxial with the combustion chamber 9. One end of the distributor 8 is projected into the combustion chamber 9. The other end of it is connected to a pipe through which the utility gas 6 and the off-gas 7 are fed. The end of the distributor 8 located within the combustion chamber 9 includes eight upper-stage gas injection ports 14 and eight lower-stage gas injection ports 15 that are arranged in the radial direction of the distributor 8 to inject the combusted gas into the combustion chamber 9. The combusted gas, which has been generated by mixing the utility gas 6 and the off-gas 7 in the pipe, is radially injected under pressure in the radial direction through the upper-stage and lower-stage gas injection ports 14 and 15 into the combustion chamber.

The above-mentioned air injection ports 16 and the lower air injection ports 19 pass through the side wall and the bottom wall, respectively, of the combustion chamber 9 in the direction perpendicular to the associated wall. Likewise, the upper-stage and lower-stage gas injection ports 14 and 15 pass through the distributor 8 in the direction perpendicular to it- Thus, the jet flow direction of the combustion air that is injected through the air injection ports 16 is rendered perpendicular to the side wall of the combustion chamber 9. The jet flow direction of the combustion air that is injected through the lower air injection ports 19 is rendered perpendicular to the bottom wall of the combustion chamber 9. In addition, the jet flow direction of the combusted gas that is injected through the upper-stage and lower-stage gas injection ports 14 and 15 is rendered perpendicular to the distributor 8.

The upper-stage gas injection ports 14 formed in the distributor 8 are generally opposed to the lowermost set of the air injection ports 18 of the multiple air injection ports 16 formed in the combustion chamber 9. Thus, the jet flow of the combusted gas coming out through the upper-stage gas injection ports 14 collide with the jet flow of the combustion air 10 coming out through the air injection ports 18. The upper-stage and lower-stage gas injection ports 14 and 15 formed in the distributor 8 and some of the lower air injection ports 19 formed in the combustion chamber 9 are arranged in such a manner that the jet flow direction of the combusted gas is crossed with the jet flow direction of the combustion air 10. Accordingly, the jet flow of the combusted gas that is injected through the upper-stage gas injection ports 14 and the lower-stage gas injection ports 15 collides with the jet flow of the combustion air 10 injected through the lower air injection ports 19.

The physical relationship among the air injection ports 18, the lower air injection ports 19, and the upper-stage gas injection ports 14 is described more in detail with reference to Fig. 2. In Fig. 2, the area where the upper-gas injection ports 14 are formed is shown in cross section only for the distributor 8 for the purpose of making a clear view of the position of the upper-stage gas injection ports 14. In the figure, the arrow "A" drawn from the center in the radial direction indicates the jet flow direction of the combusted gas that is injected through the upper-stage gas injection ports 14. The arrow "B" towards the center indicates the jet flow direction of the combustion air that is injected through the lowermost set of the air injection ports 18 indicated by the dotted line "C", of the air injection ports 16. As apparent from the above, according to this embodiment, the positions of the injection ports are adjusted in such a manner that the jet flow direction of the combusted gas is aligned with the jet flow direction of the combustion air in a generally colinear manner from the perspective of the flame radiation direction. In addition, in this embodiment, the position of some lower air injection ports 19 is adjusted in such a manner that the jet flow direction of the combustion air that is injected through the lower air injection ports 19 is crossed with the jet flow direction "A" of the above-mentioned combusted gas.

The combustion chamber 9 is made by pressing a heat-resistant stainless steel of 2 mm thick to provide the opening having a taper angle θ of 30° after the air injection ports 16 and the lower air injection ports 19 are formed in it. Alternatively, the combustion chamber 9 may be formed by drawing press instead of the press working.

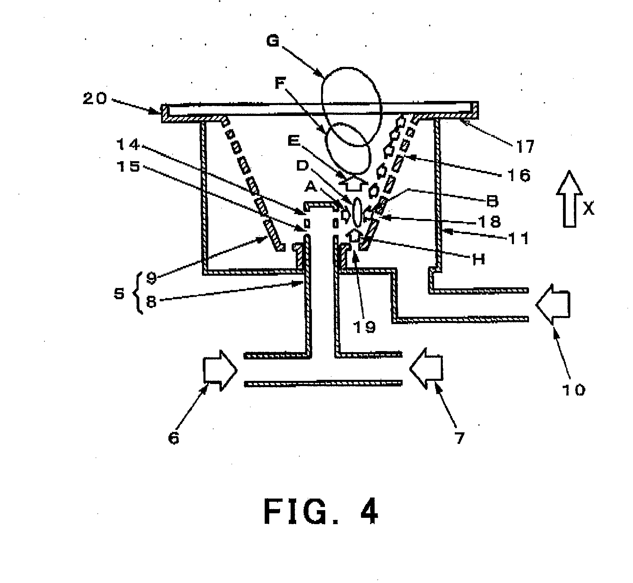

Next, flows of the gases and the flame condition are described with reference to Fig. 4, for the case where the combusted gas as a mixture of the utility gas 6 and the off-gas 7 is burnt using the burner 5 having the above-mentioned configuration according to this embodiment.

First, the jet flow of the combusted gas A that is radially injected into the combustion chamber 9 through the upper-stage gas injection ports 14 formed in the distributor 8 collides with the jet flow of the combustion air B that is injected through the lowermost set of the air injection ports 18 that are generally opposed to the upper gas injection ports 14. They collide at the position indicated by "D" in the figure. As a result, the combusted gas A and the combustion air B are mixed thoroughly. At the position "D" immediately after the upper-stage gas injection ports 14 formed in the distributor 8, the flow of the combusted gas A has its highest flow velocity. Thus, only the hydrogen component having a high burning velocity of the combusted gas is burned at this position "D" to generate flames. The combusted gas "E" based on the utility gas, which is still not burnt, flows in the flame radiation direction "X". In this case, since the combustion chamber 9 has a taper that enlarges in the flame radiation direction "X", the cross-section of the gas flow passage continuously increases. This decreases the flow velocity of the combusted gas "E". When the flow velocity of the combusted gas "E" becomes equal to or lower than the burning velocity of the utility gas, then the flame "F" is generated for combustion.

On the other hand, an increased amount of fuel to be burnt results in the increase in flow velocity of the combusted gas A. It may exceed the burning velocity of the utility gas at the position corresponding to the flame "F". In such a case, however, the tapered shape of the combustion chamber 9 continuously decreases the gas flow velocity. The flame "G" is produced at a more downstream position. The volume of the flame G may be increased arbitrarily in the flame radiation direction "X" . The temperature of the flame may be kept to be generally equal to the temperature achieved when the amount of fuel to be burnt is relatively small. Thus, generation of the nitrogen oxides can be suppressed which otherwise are easily produced during the combustion at a high temperature.

In the above-mentioned second related art, the diameter of the combustion chamber is gradually increased towards the opening. Accordingly, the flow of the combusted gas significantly varies at the step portions. In addition, the step portions disturb the flow of the gas. Therefore, the stability would be lost with a large amount of fuel to be burnt. In contrast to this, the present invention employs the combustion chamber 9 having a taper that enlarges in the flame radiation direction "X". The flow rate of the combusted gas can be varied continuously from a high rate to a low rate. This allows for the burning of the gases that are different in burning velocity in different spaces within the combustion chamber 9. Accordingly, the stability of the combustion does not deteriorated.

In addition, the upper-stage gas injection ports 14 are generally opposed to the lowermost set of the air injection ports 18. This arrangement causes the jet flow of the combusted gas "A" to collide with the jet flow of the combustion air "B", facilitating the mixing of the combusted gas "A" and the combustion air "B". Thus, hydrogen that has a higher burning velocity and is highly flammable is mixed with the air thoroughly at the collision position "D" . Therefore, the flame at the position "D" is always present in a stable condition. The fuel cell system should increase or decrease the production of electricity according to the load of electricity. The fluctuation of the load of electricity occurs when an electric-powered device is turned ON or OFF. The fluctuation thus occurs within a fraction of a second. This means that the amount of fuel to be burnt in the burner for a hydrogen generation system also fluctuates significantly in a very short period of time. Conventional burners have the problem of the flame blowout due to the sudden change in amount of fuel to be burnt. On the contrary, the flame is not blown out at the position "D" in the burner of the present invention. The flame is kept and serves as a pilot flame. No flame blowout will occur accordingly.

In this embodiment, only the upper-stage gas injection ports 14 formed in the distributor 8 are generally opposed to the air injection ports 18. However, the lower-stage gas injection ports 15 may be generally opposed to the air injection ports 18, if necessary. It goes without saying that the air injection ports that are generally opposed to the upper-stage gas injection ports 14 or the lower-stage gas injection ports 15 are not limited to those formed in the side wall of the combustion chamber 9 at the lowermost portion of it.

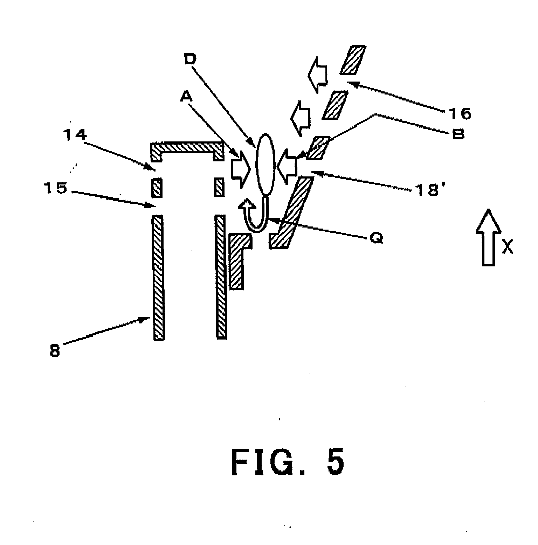

As described above, the air injection ports 16 including the air injection ports 18 are penetrating the side wall of the combustion chamber 9 at right angles. The combustion chamber 9 is then formed by press working to have a tapered-shape. Thus, as shown in Fig. 4, the jet flow direction of the combustion air "B" that is injected through the air injection ports 16 is inclined by a predetermined angle in the exhaust direction of the combusted gas (i.e., the flame radiation direction "X"). On the other hand, the upper-stage gas injection ports 14 are penetrating the distributor 8 at right angles. The distributor 8 is projected in parallel to the flame radiation direction "X". Thus, as shown in Fig. 4, the jet flow direction of the combusted gas "A" that is injected through the upper-stage gas injection ports 14 is rendered perpendicular to the flame radiation direction "X". Accordingly, the jet flow of the combustion air "B" and the jet flow of the combusted gas "A" do not collide head-on with each other. Rather, they are slightly crossed with each other. This configuration is advantageous from the viewpoint of the stable combustion as described below. This point is described with reference to Fig. 5 in which a modified version of this embodiment is shown.

Fig. 5 is an enlarged cross-sectional view around a distributor when air injection ports and gas injection ports are formed in such a manner that the jet flow direction of the combustion air coincides with the jet flow direction of the combusted gas. As shown in Fig. 5, air injection ports 18' are provided on the side wall of the combustion chamber as being inclined with respect to the side wall at a certain angle. Consequently, the jet flow direction of the combustion air "B" coincides with the jet flow direction of the combusted gas "A". This causes the jet flow of the combusted gas "A" to directly collide with the jet flow of the combustion air "B". A portion of the combusted gas that has been produced flows towards the bottom of the combustion chamber 9 in the opposite direction to the exhaust direction of the combusted gas, as indicated by the symbol "Q" in the figure. Then, the portion of the combusted gas returns in the exhaust direction of the combusted gas. The returned portion of the combusted gas flows across the jet flow of the combusted gas "A" or of the combustion air "B" , or across the flame at the position "D". The returned portion can disturb these flows, deteriorating the stability of the combustion. The combustion becomes stabler when the jet flow direction of the combustion air is displaced at a certain angle towards the exhaust direction of the combusted gas as shown in Fig. 3 than when the jet flow of the combusted gas directly collides the jet flow of the combustion air, because the jet flow of the combustion air is crossed with the jet flow of the combusted gas.

In this embodiment, the crossed collision between the jet flows of the combustion air and the combusted gas is achieved by means of forming the air injection ports 16 in the side wall of the tapered combustion chamber 9, passing through the side wall at right angles. However, the crossed-collision of the jet flows may be achieved by other ways than the above. For example, the upper-stage gas injection ports 14 may be passed through in the direction displaced towards the exhaust direction of the combusted gas, thereby to cause the crossed-collision of the jet flows.

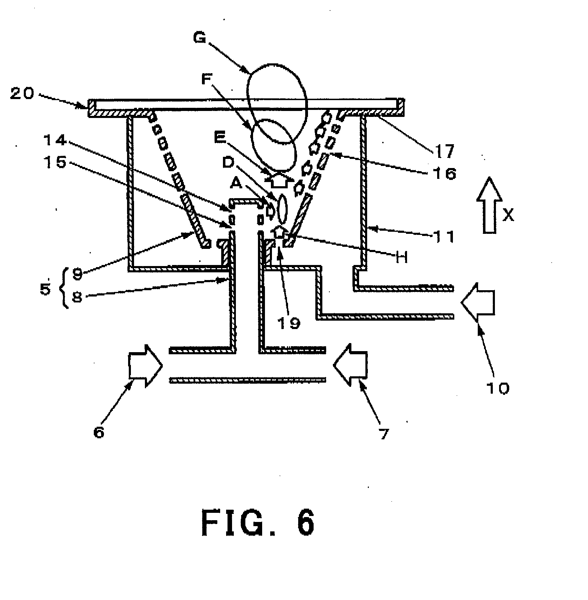

As shown in Fig. 4, the combustion air "H" is also fed through the lower air injection ports 19 in the burner 5 of this embodiment. As described above, the combustion air "H" is injected from a position that crosses from the bottom with the combusted gas "A" and the combustion air "B". This has the function of providing the better mixing of the combusted gas and the combustion air. In addition to the effect of improving the mixed condition with the gases, the combustion air "H" has the function of maintaining the flame even when the flow rate of the combustion air "B" becomes relatively excess to the flow rate of the combusted gas "A". Thus, the combustion air "H" significantly contributes to the stabilization of the combustion. It should be noted that an excellent combustion stability can also be achieved without the use of the air injection ports that are generally opposed to the upper-stage gas injection ports 14, as shown in Fig. 6. For example, this may be achieved by crossing the jet flow of the combustion air "H" that is injected through the lower air injection ports 19, with the jet flow of the combusted gas that is injected through the upper-stage gas injection ports 14 and the lower-stage gas injection ports 15.

As described above, the present invention achieves the stable combustion and reduction in concentration of the nitrogen oxides by using the combustion chamber having a taper that enlarges in the flame radiation direction. While this embodiment uses a taper angle θ of 30° for the combustion chamber, the angle θ may be optimized according to the type of the fuel and the amount of fuel to be burnt. A small angle θ results in less reduction in flow velocity of the combusted gas in the flame radiation direction. Consequently, flameout may occur when the amount of fuel to be burnt is increased. In addition, the small angle limits the size of the flame with an increased amount of fuel to be burnt. The concentration of the nitrogen oxides tends to be increased. Further, unstable fluctuation of the flame shape may lead to combustion noise. On the contrary, a large angle θ results in incomplete combustion because the fuel and the air are not mixed well. This may produce yellowish flames, grime, and carbon monoxide. Although the optimum value for the angle Of the tapered opening of the air injection port depends on the type of the fuel, the amount of fuel to be burnt, and the volume of the combustion chamber, the angle θ in a range of about 10° to 90° can ensure the stability of the combustion. The angle is preferably in a range of 10° to 45° from the viewpoints the gas-and-air mixture and the stability of combustion with the utility gas and hydrogen used as the fuel.

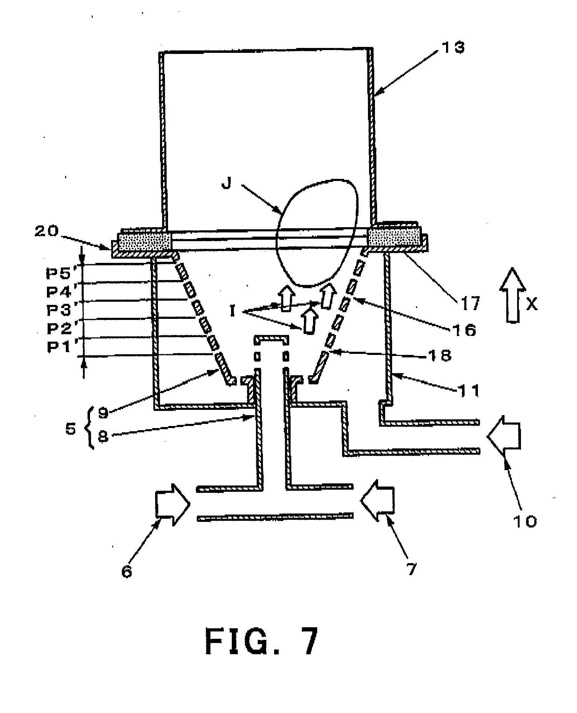

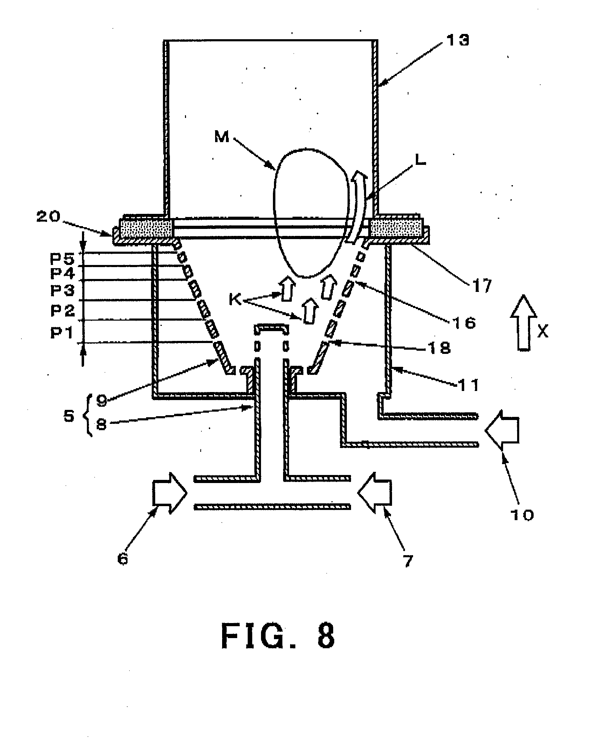

As shown in Fig. 3, the pitch P between the air injection ports 16 is sequentially decreased along the direction to the downstream of the combustion chamber in this embodiment. This configuration has a remarkable effect with a large amount of fuel to be burnt. This point is described with reference to Figs. 7 and 8. First, when the air injection ports 16 are aligned at equal distances (P1' = P2' = P3' = P4' = P5') along the direction to the downstream of the combustion chamber 9 as shown in Fig. 7, the combusted gas flows in the direction indicated by the arrow "I". This direction corresponds to the direction that is displaced towards the side wall of the combustion chamber 9 from the flame radiation direction "X". The resulting flame "J" tends to be distributed outward as shown in the figure. However, the combustion cylinder 13 is placed above the burner 5. It prevents the flame from being distributed horizontally over the width of the combustion cylinder 13. Therefore, the combusted gas is disturbed in the combustion cylinder 13, which may disturb the combustion and produce unstable flames.

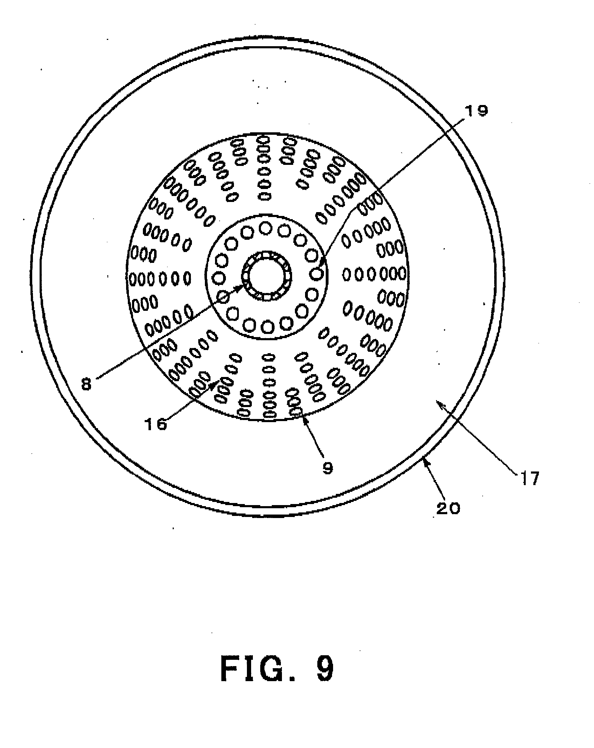

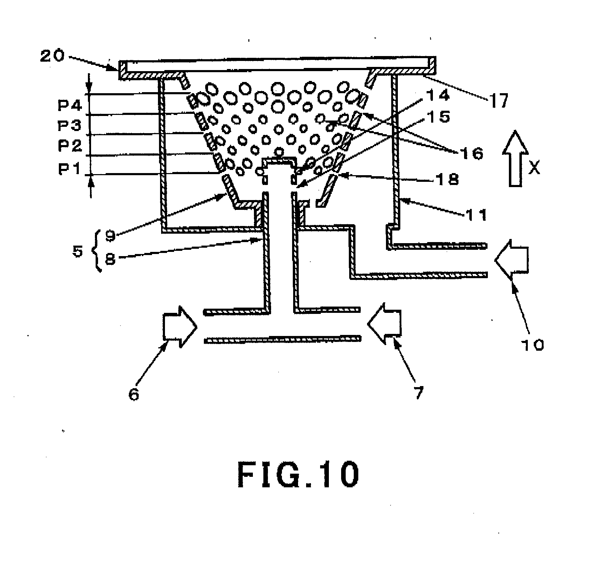

On the contrary, when the air injection ports 16 are aligned towards the downstream of the combustion chamber at a pitch that becomes smaller as it approaches to the downstream (P1 > P2 > P3 > P4 > P5) as shown in Fig. 8, a larger volume of combustion air is fed at a position closer to the opening of the combustion chamber 9. The combusted gas in this case flows in the direction "K" which is similar to the above-mentioned direction "I". In addition, the combusted gas also flows in the direction "L" along the surface of the wall of the combustion cylinder 13 because of the air that is supplied from near the opening of the combustion chamber 9. The flow of the combusted gas in the direction "L" leads the direction of the flame upward that is trying to be distributed over the width of the combustion cylinder 13. Consequently, the flame "M" is directed towards the downstream of the combustion cylinder 13 without being distributed over the width of the combustion cylinder 13. This prevents the combustion from being disturbed, improving the stability of the combustion. As apparent from the above, the more stable combustion can be achieved by increasing the amount of air supply in the downstream direction of the combustion chamber. Thus, the amount of the air supply is increased towards the downstream of the combustion chamber in this embodiment. To this end, the distance between the adjacent air injection ports 16 is adjusted in order to provide a higher port density on the downstream side than on the upstream side of the combustion chamber. However, the amount of the air supply may be increased towards the downstream of the combusted gas by any other ways including: to increase the number of the air injection ports 16 while maintaining the distance between the ports to be equal as shown in Fig. 9; and to increase the diameter of the air injection ports 16 as shown in Fig. 10. The air injection ports 16 may run like the grid of a chess board or may be in a zigzag alignment. Moreover, the present invention does not limit the shape of the upper-stage gas injection ports 14, the lower-stage gas injection ports 15, and the air injection ports 16. These ports may have any one of various shapes other than the circle. Examples of the shape include an ellipse, an oval, a rectangle, or a slit.

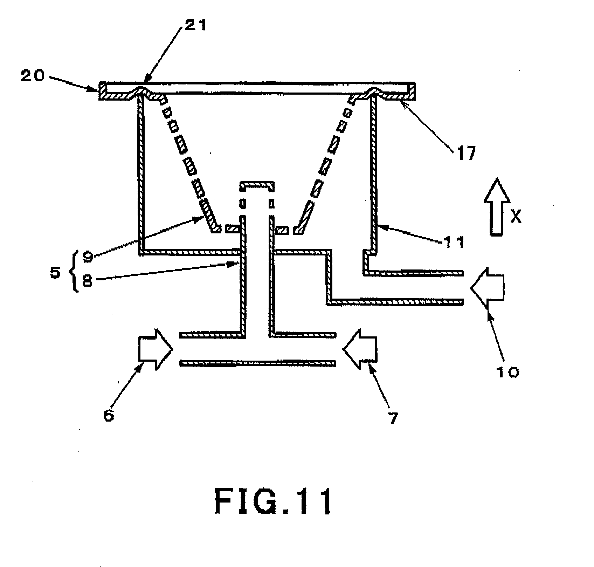

As described above, in this embodiment, the combustion chamber 9 is made by pressing a thin sheet material. Thus, the burner 5 having the above-mentioned excellent features can be provided at low price. However, a significant deformation may occur with the thin sheet material because the combustion chamber 9 is exposed to a hot combusted gas. With this respect, this embodiment uses the rib 20 in the circumferential direction, in which the rib is formed by turning the end of the flange member 17 that is provided at the upper end of the combustion chamber 9. The rib 20 significantly reduces the thermal deformation of the combustion chamber 9. Therefore, the burner of the type according to this embodiment can be manufactured through the press working of a thin sheet material. The position of the turned-up portion is not limited to the end of the flange member 17 of the combustion chamber 9. For example, as shown in Fig. 11, aturned-up portion 21 may be provided along the circumference in the middle of a flange member 17. The turned-up portion 21 may also be used as a means to determine the position relative to the air chamber 11. This configuration may improve the assembling operations.

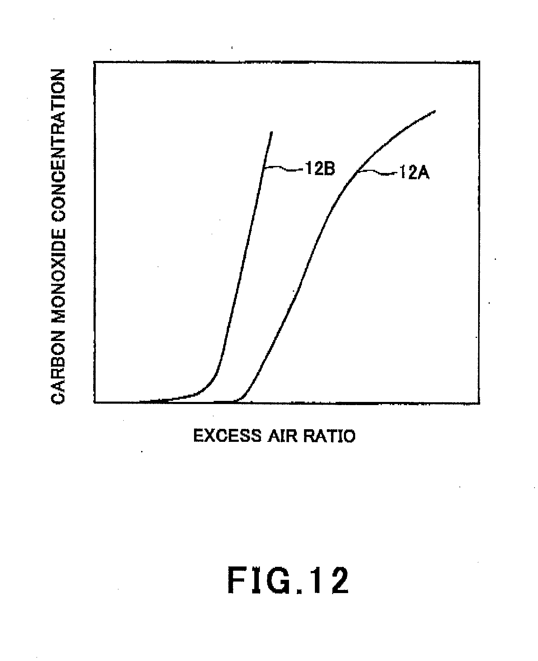

As described above, the combustion can be made stabler with the burner according to this embodiment. Fig. 12 is a graphical representation of the carbon monoxide concentration as a function of the excess air ratio between the burner of this embodiment and a conventional burner. In Fig. 12, 12A shows the relation for the burner according to this embodiment and 12B shows the relation for the conventional burner. As shown in Fig. 12, the burner of this embodiment hardly produces carbon monoxide at a higher excess air ratio as compared with a conventional burner. Carbon monoxide typically results from incomplete combustion of the combusted gas and the combustion air that are mixed insufficiently. From the Fig. 12, the burner of this embodiment is expected to maintain a good mixing condition with the more stable combustion over a wider range as compared with the conventional burner.

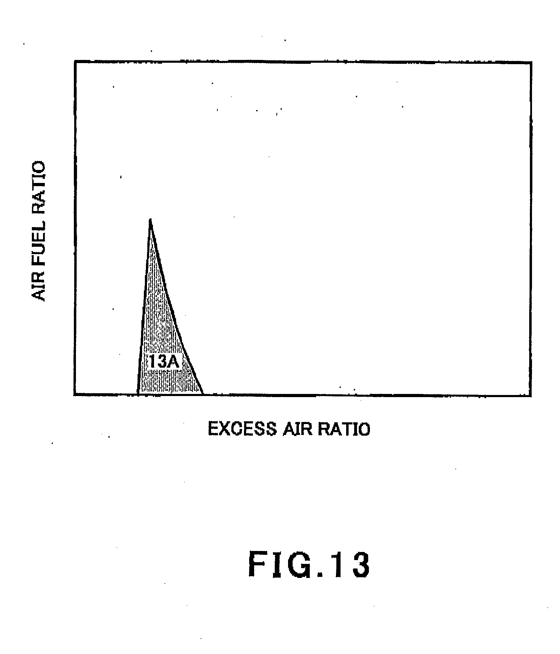

Fig. 13 is a graphical representation for explaining of the existence of a fluctuating combustion zone. The ordinate represents the flow rate of the air that is supplied from the bottom of the combustion chamber. When the flow rate of the air that is supplied from the bottom of the combustion chamber is low, a fluctuating combustion zone 13A is present within a certain range of the excess air ratio, as shown in Fig. 13. In the fluctuating combustion zone 13A, the flame in the combustion chamber may be intermittent with instantaneous breaks as if it had caught its breath. Alternatively or in addition to it, combustion noise may be produced. However, the fluctuating combustion zone 13A disappears as the flow rate of the air from the bottom increases. In the burner of this embodiment, the lower air injection ports are provided in the bottom wall of the combustion chamber to supply air from the bottom in order to ensure the combustion without the fluctuating combustion zone 13A, thereby to ensure more stable combustion.

While the present invention has thus been described in conjunction with the embodiment wherein only a single distributor 8 is used, the number of the distributors may be varied according to the amount of fuel to be burnt when the present invention is applied to a large-scale hydrogen generation system. While this embodiment is for the case where the combustion chamber 9 has a circular opening, the combustion chamber may have an opening of a different shape such as a polygon or oval, that fits for the shape of the combustion cylinder.

In this way, the hydrogen generation system in a fuel cell system that includes the burner according to this embodiment with which the stable combustion can be achieved, can produce hydrogen in a stable manner even with a fluctuated power generation load. This allows a stable operation of the fuel cell system.

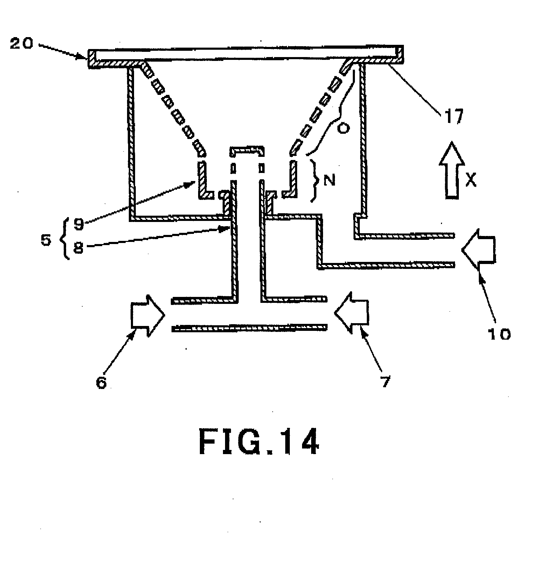

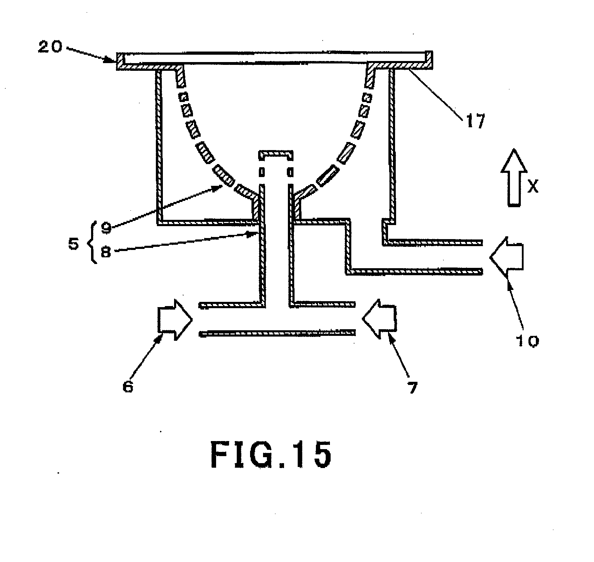

The same effect as the effect of the present invention can be achieved as long as the combustion chamber 9 has a taper. Therefore, as shown in Fig. 14 for example, a combination of a cylindrical portion "N" and a tapered portion "O" may provide a good burner that exhibits a stable combustion performance. Furthermore, the taper of the combustion chamber 9 is not limited to be defined by a straight line. Instead, as shown in Fig. 15, the taper may be curved to provide a similar effect to the effect of the present invention.

In addition, while the gas injection ports formed in the distributor 8 of this embodiment are arranged into a two-stage configuration. The number of the upper-stage and lower-stage gas injection ports is eight for each. The number of the stages and the number of the ports may be determined appropriately according to the size of the distributor(s). When the gas injection ports are arranged into a multi-stage configuration as in this embodiment, the ports in the multiple stages may be arranged on a straight line or may be arranged not to be on the straight line in order to facilitate the mixing of the combusted gas and the air.

Furthermore, it is not necessary that all gas injection ports formed in the distributor 8 are generally opposed to the air injection ports formed in the combustion chamber 9. However, all gas injection ports may generally be opposed to the air injection ports in order to further facilitate the mixing of the combusted gas and the air. Likewise, it is not necessary that all lower air injection ports formed in the combustion chamber 9 are arranged in such a manner that the jet flow direction of the combustion air that is injected through the lower air injection ports is crossed with the jet flow direction of the combusted gas that is injected through the gas injection ports. They may be arranged in such a manner.

### (Second Embodiment)

A burner according to a second embodiment of the present invention is configured to independently feed the utility gas and the off-gas from a distributor to a combustion chamber without mixing them together.

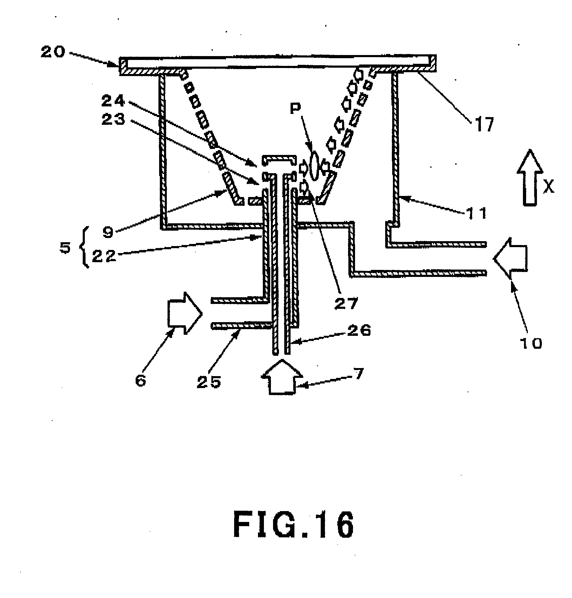

Fig. 16 is a cross-sectional view showing a configuration of a burner according to the second embodiment of the present invention. As shown in Fig. 16, a distributor 22 has a first gas injection port 23 and a second gas injection port 24. The first gas injection port 23 is for injecting the utility gas 6 that is supplied via a pipe 25 into a combustion chamber 9. The second gas injection port 24 is for injecting the off-gas 7 that is supplied via a pipe 26. The second gas injection port 24 is located at a position that is closer to the place where the flame is produced, than the first gas injection port 23. This configuration independently supplies the utility gas 6 and the off-gas 7 to the combustion chamber 9 without being mixed together. Other components and parts of the burner according to this embodiment are similar to those described in conjunction with the first embodiment. Accordingly, such components and parts are depicted similar reference numerals and description thereof will be omitted.

In the first embodiment, the utility gas 6 and the off-gas 7 are mixed together before being supplied to the distributor 8. However, the amount of the utility gas 6 to be fed may be varied due to the variation in amount of the off-gas 7 to be fed which is caused as a result of the fluctuation of the load of electricity in the fuel cell system. More specifically, when the amount of the off-gas 7 to be fed is decreased for example, the pressure across the distributor 8 and the pressures across the gas injection ports 14 and 15 are dropped. Then, the flow rate of the utility gas 6 is increased according to a discharge pressure-flow rate curve of a utility gas supply pump (not shown). On the contrary. when the amount of the off-gas 7 to be fed is increased, the utility gas supply pump reduces the amount of the utility gas 6 to be fed. It is possible to determine the flow rate of the off-gas 7 to control the flow rate of the utility gas supply pump when the change in flow rate of the off-gas 7 is gradual. However, the pump cannot follow this change when the flow rate of the off-gas 7 varies suddenly. Then, the flow rate of the utility gas 6 may be varied temporarily as described above. The burner according to the first embodiment can continue stable combustion even with such fluctuation in flow rate of the utility gas 6. However. combustion noise may be produced or the concentration of carbon monoxide in the exhaust gas may be increased temporarily in some cases.

This problem can be solved by independently supplying the utility gas 6 and the off-gas 7 to the combustion chamber 9 in this embodiment. Furthermore, the utility gas 6 is supplied upstream of the off-gas 7 which contains hydrogen, in a combustion chamber 9. With this configuration, the jet flow of the utility gas 27 that is injected through the first gas injection port 23 always crosses the hydrogen flame "P". This ensures the utility gas to be ignited for combustion. Therefore, the embodiment can prevent the dying out of flames and discharge of the utility gas without being burnt completely, even when the flow rate of the utility gas is temporarily reduced to almost none.

### (Third Embodiment)

A burner according to a third embodiment of the present invention is configured to allow detection of ignition and flames.

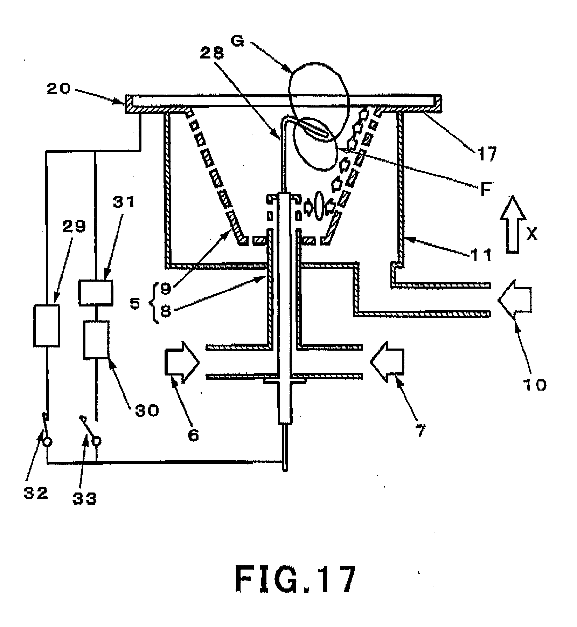

Fig. 17 is a cross-sectional view showing a configuration of a burner according to the third embodiment of the present invention. As shown in Fig. 17, a rod-shaped electrode 28 is inserted into a distributor 8. The electrode 28 has the function of an ignition electrode and an electrode for flame detection. One end of the electrode 28 is projected into a combustion chamber 9 and is bent towards the side wall of the combustion chamber 9. In Fig. 17, the position of the flame "F" produced with a low gas flow rate and the position of the flame "G" produced with a high gas flow rate, as described in the first embodiment, are shown as well. The one end of the electrode 28 is adjusted to be positioned in a space where the flame "F" overlaps the flame "G".

On the other hand, the other end of the electrode 28 extends to the outside of the distributor 8. It is connected to a high voltage power supply 29 for ignition, through a switch 32. It is also connected to a power supply 30 for flame detection and a flame detector 31 through a switch 33. The high voltage power supply 29 for ignition and the flame detector 31 are connected to a flange member 17 on the combustion chamber 9.

Other components and parts of the burner according to this embodiment are similar to those described in conjunction with the first embodiment. Accordingly, such components and parts are depicted similar reference numerals and description thereof will be omitted.

In the burner having the above-mentioned configuration, the utility gas 6 and the combustion air 10 are fed in a predetermined amount for ignition during the start-up operation of the fuel cell system. in such a case, the switch 32 is closed and the switch 33 is opened to apply a high voltage across the electrode 28 and the combustion chamber 9 on the distributor 8 by using the high voltage power supply 29 for ignition, thereby to cause discharge. The discharge occurs between the tip of the electrode 28 and the combustion chamber 9 nearby. This portion corresponds to the place where the utility gas is burnt and the flame "F" is produced even with a small flow rate of the utility gas. Therefore, the burner is ignited easily.

To detect the flame during the operation of the fuel cell system, the switch 32 is opened and the switch 33 is closed. The power supply 30 for flame detection is used to apply a voltage across the electrode 28 and the combustion chamber 9 on the distributor 8. The electric current flowing between them is measured using the flame detector 31. The flame detector 31 is for measuring the electric current created by charged particles that are present in the flame. When the flame disappears, the conductive charged particles are no more in the flame. No electric current flows accordingly, and the flameout is detected. This approach for detecting the flame is less precise in hydrogen flames because of low ion current. Therefore, the tip of the flame detecting electrode is preferably located in the flame of the utility gas. The combustion chamber in the above-mentioned first related art is cylindrical in shape. Therefore, the position of the flame significantly varies depending on the flow rate of the utility gas. When the flame is far away from the position of the detector of the flame detecting electrode, then the detector often fails to detect the flame even when it exists. On the contrary, the flame "G" produced with a high gas flow rate and the flame "F" produced with a low gas flow rate are positioned relatively closely when using the burner of the present invention. By positioning the tip of the electrode 28 at the position where both flames are present as shown in the figure, the flame can be detected without fail even when the flow velocity of the utility gas is varied.

As apparent from the above, using the burner of the present invention, the flame can be detected with a simple configuration. The fuel cell system can be operated more safely.

As described above, according to this embodiment, the single electrode has the functions of both the ignition electrode and the flame detection electrode. However, it goes without saying that two separate electrodes may be provided that have their respective function.

By combining the above-mentioned embodiments, various different burners for hydrogen generation systems can be achieved depending on the size of the hydrogen generation system and the volume of the combustion chamber.

Numerous modifications and alternative embodiments of the invention will be apparent to those skilled in the art in view of the forgoing description. Accordingly, the description is to be construed as illustrative only, and is provided for the purpose of teaching those skilled in the art the best mode of carrying out the invention. The details of the structure and/or function may be varied substantially without departing from the spirit of the invention.

## Claims

1. A burner for a hydrogen generation system comprising;
a combustion chamber that has a taper that enlarges in a flame radiation direction; and
a distributor that is placed in said combustion chamber to supply to said combustion chamber a fuel gas containing a compound made up of at least carbon and hydrogen and an off-gas that is released from a fuel call, said distributor being projected in the flame radiation direction,
said combustion chamber having multiple combustion air injection ports formed in said combustion chamber to inject combustion air into said combustion chamber,
said distributor having multiple gas injection ports formed in said distributor to inject the fuel gas and the off-gas into said combustion chamber,
at least some of the combustion air injection ports and at least some of the gas injection ports being arranged in such a manner that a jet flow of the combustion air collides with jet flows of the fuel gas and the off-gas.

2. The burner as claimed in Claim 1, wherein the combustion air injection ports and the gas injection ports that are arranged to achieve the collision are aligned with each other in a generally colinear manner from the perspective of the flame radiation direction.

3. The burner as claimed in Claim 1 or 2, wherein the combustion air injection ports that are arranged to achieve the collision are formed in the tapered side wall of said combustion chamber.

4. The burner as claimed in Claim 1 or 2, wherein the combustion air injection ports that are arranged to achieve the collision are formed in the tapered side wall of said combustion chamber, the combustion air injection ports being passed through the side wall in a direction generally perpendicular to the side wall, and wherein the gas injection ports that are arranged to achieve the collision is passed through said distributor in a direction generally perpendicular to said distributor.

5. The burner as claimed in Claim 1, wherein the combustion air injection ports that are arranged to achieve the collision are formed in the bottom wall of said combustion chamber.

6. The burner as claimed in Claim 1, wherein the combustion air injection ports that are arranged to achieve the collision are formed in the tapered side wall of said combustion chamber and in the bottom wall of said combustion chamber.

7. A burner for a hydrogen generation system comprising:
a combustion chamber that has a taper that enlarges in a flame radiation direction; and
a distributor that is placed in said combustion chamber to supply to said combustion chamber a fuel gas and an off-gas that is released from a fuel cell, said distributor being projected in the flame radiation direction,
said combustion chamber having multiple combustion air injection ports formed in the tapered side wall of said combustion chamber to inject combustion air into said combustion chamber, said distributor having multiple gas injection ports formed in said distributor to inject the fuel gas and the off-gas into said combustion chamber,
at least some of the combustion air injection ports and at least some of the gas injection ports being generally opposed to each other.

8. The burner as claimed in Claim 7, wherein the combustion air injection ports that are generally opposed are formed in the tapered side wall of said combustion chamber, the combustion air injection ports being passed through the side wall in a direction generally perpendicular to the side wall, and wherein the gas injection ports that are generally opposed are passed through said distributor in a direction generally perpendicular to said distributor.

9. The burner as claimed in Claim 1 or 7. wherein a taper angle of said combustion chamber is in a range of from 10 degrees to 90 degrees, both inclusive.

10. The burner as claimed in Claim 1 or 7, wherein the combustion air injection ports are arranged in such a manner that a larger amount of the combustion air is injected into said combustion chamber on the downstream side than on the upstream side of said combustion chamber.

11. The burner as claimed in Claim 10, wherein the density of the combustion air injection ports is higher on the downstream side than on the upstream side of said combustion chamber.

12. The burner as claimed in Claim 10, wherein the diameter of the combustion air injection ports is larger on the downstream side than on the upstream side of said combustion chamber.

13. The burner as claimed in Claim 1 or 7, wherein the gas injection ports comprising a first gas injection port and a second gas injection port, the first gas injection port being for injecting the fuel gas, and the second gas injection port being for injecting the off-gas, the second gas injection port being located downstream of said combustion chamber relative to the first gas injection port.

14. The burner as claimed in Claim 1 or 7, wherein said combustion chamber is formed by pressing or draw-pressing a sheet-like material.

15. The burner as claimed in Claim 1 or 7, wherein said combustion chamber is cylindrical in shape having a flange member that is projected outward in the radial direction, the flange member having a turned-up portion along the periphery thereof.

16. The burner as claimed in Claim 1 or 7, further comprising;
an electrode that is placed in said combustion chamber; and
a flame detection circuit that is connected to said electrode.

17. The burner as claimed in Claim 1 or 7, further comprising:
an electrode that is placed in said combustion chamber; and
a flame ignition circuit that is connected to said electrode.

18. The burner as claimed in Claim 1 or 7, further comprising;
an electrode that is placed in said combustion chamber;
a flame detection circuit and a flame ignition circuit that are connected to said electrode; and
a switch circuit that is used to switch the connection between said electrode and said flame detection circuit and the connection between said electrode and said flame ignition circuit.

19. The burner as claimed in Claim 18, wherein said electrode is projected from the center of said distributor in the flame radiation direction.

20. A hydrogen generation system comprising:
a reformer for generating a reformed gas that contains hydrogen by reforming a feed material that contains a compound made up of at least carbon and hydrogen; and
a burner for a hydrogen generation system according to Claim 1 or 7.
